# EUROPEAN PATENT APPLICATION

(11) **EP 3 451 543 A1**
(43) Date of publication of application: **06.03.2019**
(21) Application number: 17188489.3
(22) Date of filing: 30.08.2017
(51) Int. Cl.: H04B 5/00, H04W 52/02

(54) **NFC DEVICE AND POWER MANAGEMENT METHOD**

(71) Applicant: NXP B.V., 5656 AG Eindhoven (NL)
(72) Inventor: HUEBER, Gernot, 5656 AG Eindhoven (NL); MACNAMARA, Ian, 5656 AG Eindhoven (NL)
(74) Representative: Krott, Michel

(57) **Abstract**

In accordance with a first aspect of the present disclosure, a near field communication (NFC) device is provided, comprising a processor and a wake-up detector, wherein the processor and the wake-up detector are configured to operate in different power domains, and wherein the wake-up detector is configured to wake up the processor in response to receiving power derived from a radio frequency (RF) field. In accordance with a second aspect of the present disclosure, a method of managing power in an NFC device is conceived, said NFC device comprising a processor and a wake-up detector that operate in different power domains, wherein the wake-up detector wakes up the processor in response to receiving power derived from an RF field.

## Description

### OVERVIEW

The present disclosure relates to an NFC device. Furthermore, the present disclosure relates to a method of managing power in an NFC device. The use of near field communication (NFC) enables the wireless transmission of data over relatively short distances. NFC-enabled mobile devices, such as wearable devices, often contain a host processor and an NFC controller which is operatively coupled to the host processor. The NFC controller is configured to control the near field communication between the NFC device and an external device, for example an NFC reader. It may be difficult to manage the power consumption of an NFC-enabled mobile device.

### SUMMARY

In accordance with a first aspect of the present disclosure, a near field communication (NFC) device is provided, comprising a processor and a wake-up detector, wherein the processor and the wake-up detector are configured to operate in different power domains, and wherein the wake-up detector is configured to wake up the processor in response to receiving power derived from a radio frequency (RF) field.

In an embodiment, the wake-up detector is coupled to a signal line between a matching network and an input of a receiver of the NFC device, and the wake-up detector is configured to receive the power derived from the RF field via said signal line.

In an embodiment, the wake-up detector is communicatively coupled to a power management unit of the NFC device, and the wake-up detector is configured to transmit a wake-up signal to said power management unit.

In an embodiment, the wake-up detector is communicatively coupled to an external host processor, and the wake-up detector is configured to transmit a wake-up signal to said host processor.

In an embodiment, the wake-up detector is communicatively coupled to an external system power management unit, and the wake-up detector is configured to transmit a wake-up signal to said system power management unit.

In an embodiment, the NFC device is by default in at least one of a power-off state, a deep-sleep state, a low-power state or a standby state.

In an embodiment, waking up the processor comprises causing an NFC system state to change from standby to active by initiating a start-up sequence, wherein said start-up sequence is initiated in response to receiving, by the processor, a wake-up signal from the wake-up detector.

In an embodiment, receiving, by the power management unit, the wake-up signal initiates a start-up sequence which causes an NFC system state to change from power-off to active.

In an embodiment, the wake-up detector is implemented as a passive device, a semi-active device, or an active device.

In an embodiment, a wearable device comprises an NFC device of the kind set forth.

In accordance with a second aspect of the present disclosure, a method of managing power in an NFC device is conceived, said NFC device comprising a processor and a wake-up detector that operate in different power domains, wherein the wake-up detector wakes up the processor in response to receiving power derived from an RF field.

In an embodiment, the wake-up detector is coupled to a signal line between a matching network and an input of a receiver of the NFC device, and the wake-up detector receives the power derived from the RF field via said signal line.

In an embodiment, the wake-up detector is communicatively coupled to a power management unit of the NFC device, and the wake-up detector transmits a wake-up signal to said power management unit.

In an embodiment, the wake-up detector is communicatively coupled to an external host processor, and the wake-up detector transmits a wake-up signal to said host processor.

In an embodiment, the wake-up detector is communicatively coupled to an external system power management unit, and the wake-up detector transmits a wake-up signal to said system power management unit.

### DESCRIPTION OF DRAWINGS

Embodiments will be described in more detail with reference to the appended drawings, in which:
Fig. 1 shows an illustrative embodiment of an NFC system;
Fig. 2 shows another illustrative embodiment of an NFC system;
Fig. 3A shows an illustrative embodiment of a wake-up detector implementation;
Fig. 3B shows another illustrative embodiment of a wake-up detector implementation;
Fig. 4 shows a further illustrative embodiment of a wake-up detector implementation.

### DESCRIPTION OF EMBODIMENTS

In many applications and devices that use NFC technology (e.g. mobile phones, wearable devices) power consumption is a key system performance parameter. In particular, an NFC system should often remain functional even if it receives only a limited amount of power, for example because only a small battery is available. In order to keep unneeded battery drain to a minimum, not needed components and sub-systems should be turned off. Furthermore, NFC systems should be autonomous - for example, independent from a system power management unit (PMU) - in order to reduce the impact of system PMU inefficiency. Therefore, NFC systems often use an integrated PMU. Also, it is important that transactions can be initiated - which often requires communication with a host processor - even if the host processor is in a standby state of in a power off state.

Wake-up detectors are often active modules, which are for example implemented using amplifiers and comparators. Such modules depend on a stable power supply. Thus, some parts of the NFC system should be active in order to supply the active wake-up modules continuously or in a duty-cycled manner. This, in turn, costs current, thereby draining the system's battery. Furthermore, it should be possible to wake up the host processor or system power management unit, which requires supplying specific input/output pads (IOs). However, typical digital IOs are supplied by an IO supply delivered by the host processor, which in turn might be in a power off state.

Therefore, in accordance with the present disclosure, an NFC device is provided, comprising a processor and a wake-up detector, wherein the processor and the wake-up detector are configured to operate in different power domains, and wherein the wake-up detector is configured to wake up the processor in response to receiving power derived from a radio frequency (RF) field. Since the processor and the wake-up detector are configured to operate in different power domains, the wake-up detector may remain functional when the NFC system or the host processor are in a power off state. Furthermore, since the wake-up detector itself is powered by the field, no additional power supply is needed.

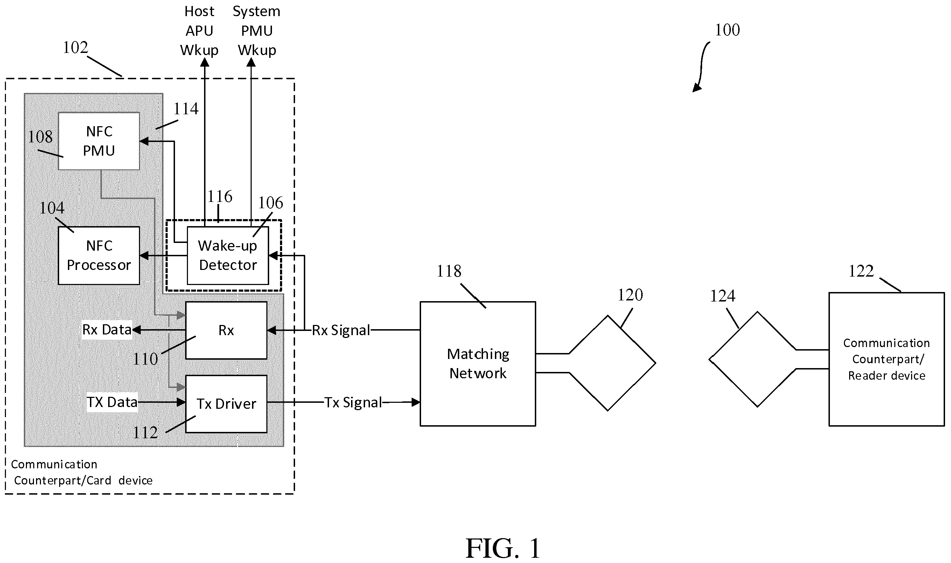

**Fig. 1** shows an illustrative embodiment of an NFC system 100. The NFC system comprises an NFC device 102 communicatively coupled to a matching network 118 and an NFC antenna 120. The NFC device 102 may for example be an NFC controller configured to enable NFC communication between a host device (not shown) and an NFC reader 122, which comprises another NFC antenna 124. The host device may contain an emulated smart card executed on a host processor; this functionality is known as host card emulation (HCE). The NFC device 102 comprises an NFC power management unit 108, a processor 104 (referred to as "NFC processor"), an NFC receiver 110, and an NFC transmission driver 112. Furthermore, the NFC device comprises a wake-up detector 106. The NFC power management unit 108, NFC processor 104, NFC receiver 110 and NFC transmission driver 112 operate in a first power domain 114. The wake-up detector 106 operates in a second power domain 116 which is different from the first power domain 114. A power domain may be regarded as a set of modules that are supplied by the same power source. In this case, the modules in the first power domain 114 are supplied by the NFC PMU 108. The wake-up detector 106 operates in a second power domain 116, because it is not powered by the NFC PMU 108, or at least it is configured to operate in a mode in which it does not depend on the NFC PMU 108. Consequently, there is no voltage supply line from the NFC PMU 108 to the wake-up detector 106. Thus, the NFC PMU 108 may turn of the whole NFC controller or even be unsupplied. Yet, the wake-up detector 106 is active and capable to detect a signal in order to initiate a wake-up sequence of the NFC controller or the host system. The wake-up detector 106 may be supplied by a dedicated PMU (not shown) or, as shown in the examples hereinbelow, generate its supply on demand by harvesting the power from the signal to be detected. This is an elegant solution, because the harvester (i.e., the rectifier) generates a rectified (harvested) voltage that may be used immediately as a "detection" signal.

Furthermore, the wake-up detector 106 is configured to transmit a wake-up signal to the NFC processor 104. Furthermore, the wake-up detector 106 may be configured to transmit a wake-up signal to the NFC power management unit 108, to an external host processor (not shown but referred to as "Host APU", i.e. a host Application Processing Unit), and/or to an external system PMU (not shown). The wake-up detector 106 may cause the NFC controller to switch from a power-off, deep sleep or power-down, low-power, or standby state to an active state.

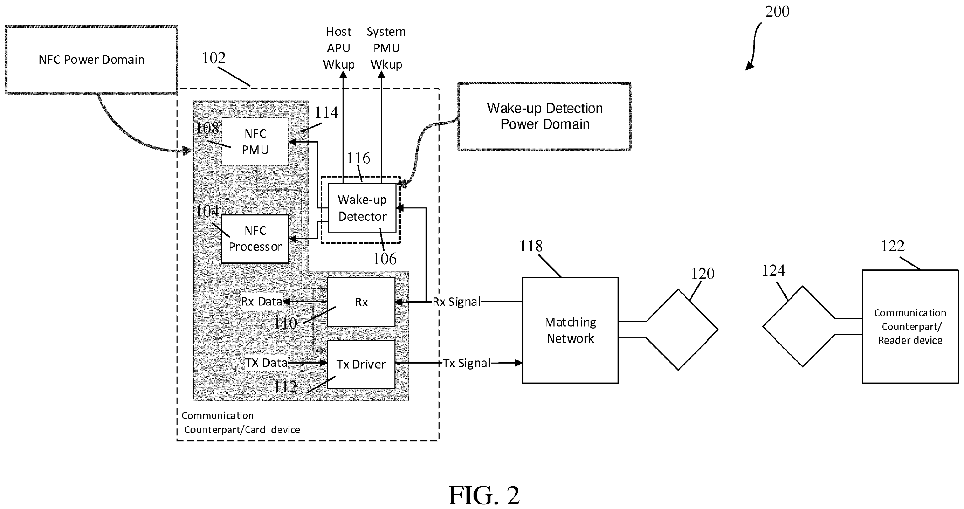

**Fig. 2** shows another illustrative embodiment of an NFC system 200. The NFC system 200 shown in Fig. 2 comprises the same elements as shown in Fig. 1. As mentioned above, in an embodiment, the wake-up detector 106 is coupled to a signal line between the matching network 118 and an input of the NFC receiver 110. In this way, the wake-up detector 106 can easily receive the power derived from the RF field, or, in other words, this facilitates energizing the wake-up detector 106 using the RF field. Fig. 1 shows that the wake-up detector 106 is coupled to said signal line via a connection within the NFC device 102, while Fig. 2 shows that the wake-up detector 106 is coupled to said signal line via a connection external to the NFC device 102. Thus, different implementations of said connection may be envisaged. It is noted that the wake-up detector 106 may in some embodiments be entirely independent from the NFC PMU 108 (and from the system PMU), while in other embodiments the wake-up detector 106 may receive a very low powered supply in specific modes of the NFC PMU 108 or system PMU, which neither allows the NFC device 102 nor the host processor to be in an active state.

In an embodiment, the wake-up detector 106 is communicatively coupled to the NFC PMU 108, and the wake-up detector 106 is configured to transmit a wake-up signal to the NFC PMU 108. In this way, a practical and efficient wake-up method may be realized. In particular, some technical standards (NFC Forum, ISO 14443, EMVCo) prescribe that an NFC controller has to be capable to demodulate and respond to messages received 5ms after the RF field is turned on by the external reader. Consequently, there is only little time for the detector to wake up the NFC controller from a standby or power-down state such that the incoming message can be decoded and responded to. By waking up the NFC PMU 108 directly, in addition to the host processor 104, the NFC controller may respond more quickly to a received message. This, in turn, enables that the NFC controller meets the requirements defined by said standards.

Furthermore, the wake-up detector 106 may be communicatively coupled to an external host processor (i.e., a host processor external to the NFC device 102), in which case the wake-up detector 106 may be configured to transmit a wake-up signal to said host processor. In this way, the host processor may also be placed in a power saving mode, and it may be woken up automatically when a NFC transaction is initiated, for example simultaneously with the host processor 104. This facilitates realizing an efficient power management of the host device. Alternatively, or in addition, the wake-up detector 106 may be communicatively coupled to an external system PMU (i.e., a system PMU external to the NFC device 102), in which case the wake-up detector 106 may be configured to transmit a wake-up signal to said system PMU. In this way, various system components - including components of the host device that support executing NFC transactions, such as secure elements, displays, etc. - may be placed in a power saving mode, and woken up through the their respective PMUs when an NFC transaction is initiated.

In an embodiment, the NFC device 102 is by default in a power-off state, a deep-sleep state, a low-power state or a standby state. In this way, the power consumption may be minimized. More specifically, the NFC device 102 may be in a power off state, meaning that the NFC PMU 108 is switched off entirely. Alternatively, the NFC device 102 may be in a low-power state, meaning that the NFC PMU 108 is switched to a very low power state with minimal power consumption and most modules unpowered. In that case, the wake-up detector 106 may use some active circuitry rather than being fully passive. Alternatively, the NFC device 102 may be in a power off state, meaning that the NFC device 102 is unpowered.

Furthermore, the host processor may be in a power off mode, because the system PMU is switched off entirely. In that case, a wake-up signal from the wake-up detector 106 may be transmitted to the system PMU in order to trigger a wake-up of the system PMU and consequently of the system including the host processor. Furthermore, the host processor may be in a standby mode, because the system PMU is partly switched off and/or some parts of the system are not active (e.g., the IO supplies or a screen). In that case, a wake-up signal from the wake-up detector 106 may be transmitted to the system PMU and/or the host processor in order to trigger a wake-up of the system PMU and consequently of the system including the host processor.

In a practical and efficient implementation, waking up the NFC processor 104 comprises causing the NFC system state to change from standby to active by initiating a start-up sequence, wherein said start-up sequence is initiated in response to receiving, by the NFC processor 104, a wake-up signal from the wake-up detector 106. In another practical and efficient implementation, receiving, by the NFC PMU 108, the wake-up signal initiates a start-up sequence which causes an NFC system state to change from power-off to active.

Furthermore, the wake-up detector 106 may trigger an event in the host processor by, for example, transmitting the *Host APU Wkup* signal as shown in Figs. 1 and 2. The signal may use an analog pad because the pad supply might not be available at the time of the wake-up event. Also, the wake-up detector 106 may trigger an event in the system PMU by, for example, transmitting the *System PMU Wkup* signal as shown in Figs. 1 and 2. Again, the signal may use an analog pad because the pad supply might not be available at the time of the wake-up event. Furthermore, the wake-up detector 106 may use pads that are powered by the wake-up detector 106 autonomously. Thus, the wake-up detector 106 may be capable of asserting trigger signals to external wake-up targets (host processor, system PMU) although the general IOs are in a power off mode.

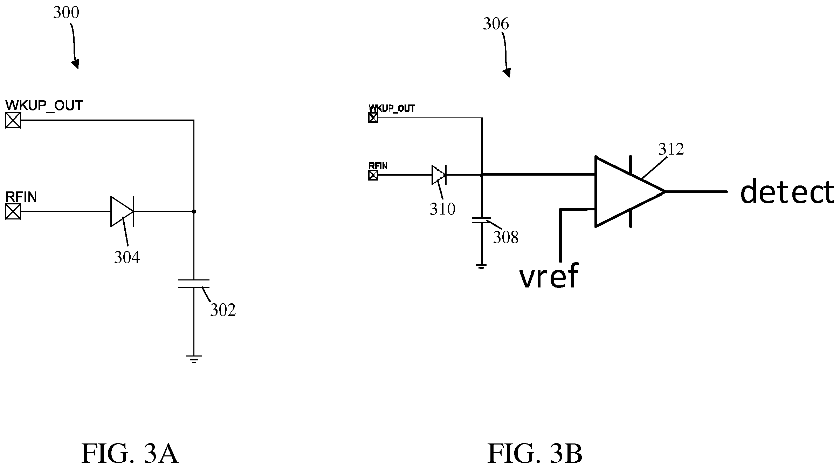

Furthermore, the wake-up detector 106 may be implemented as a passive device, a semi-active device, or an active device. More specifically, in some implementations, the wake-up detector may comprise a capacitor and a (single) diode for rectifying the input such that the capacitor is charged, thus forming a half-wave rectifier. A wake-up detector implementation of this kind is shown in Figs. 3A and 3B.

**Fig. 3A** schematically shows a fully passive implementation 300 of a wake-up detector based on a half-wave rectifier. The wake-up detector comprises capacitor 302 and diode 304. This implementation 300 is a simple implementation, in which the power is harvested and stored on a capacitor 302. The wake-up signal is analog, and - at a level that is predefined at an external comparator (not shown) - the wake-up sequence will be initiated.

**Fig. 3B** shows a semi-active implementation 306 of a wake-up detector based on a half-wave rectifier. The wake-up detector comprises, besides a capacitor 308 and a diode 310, a low-power comparator which enables using programmable threshold levels. This implementation 306 is similar to the implementation 300 shown in Fig. 3A, but an active device (an opamp) is used to assert the wake-up signal only at a specific threshold voltage. The output is "digital".

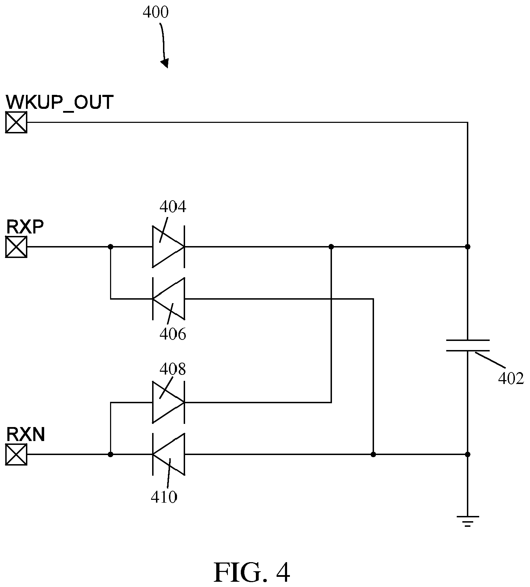

**Fig. 4** shows an active implementation 400 of a wake-up detector based on a full-wave rectifier. The wake-up detector comprises a capacitor 402 and a plurality of diodes 404, 406, 408, 410. More specifically, this wake-up detector uses a capacitor 402 and four diodes 404, 406, 408, 410 for rectifying the input such that the capacitor is charged, thus forming a full-wave rectifier. This implementation 400 makes better use of the available power and is more sensitive.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE SIGNS

- 100: NFC system
- 102: NFC device
- 104: NFC processor
- 106: wake-up detector
- 108: NFC power management unit
- 110: NFC receiver
- 112: NFC transmission driver
- 114: NFC power domain
- 116: wake-up detection power domain
- 118: matching network
- 120: NFC antenna
- 122: NFC reader
- 124: NFC antenna
- 200: NFC system
- 300: wake-up detector implementation
- 302: capacitor
- 304: diode
- 306: wake-up detector implementation
- 308: capacitor
- 310: diode
- 312: comparator
- 400: wake-up detector implementation
- 402: capacitor
- 404: diode
- 406: diode
- 408: diode
- 410: diode

## Claims

1. A near field communication, NFC, device, comprising a processor and a wake-up detector, wherein the processor and the wake-up detector are configured to operate in different power domains, and wherein the wake-up detector is configured to wake up the processor in response to receiving power derived from a radio frequency, RF, field.

2. The NFC device of claim 1, wherein the wake-up detector is coupled to a signal line between a matching network and an input of a receiver of the NFC device, and wherein the wake-up detector is configured to receive the power derived from the RF field via said signal line.

3. The NFC device of claim 1 or 2, wherein the wake-up detector is communicatively coupled to a power management unit of the NFC device, and wherein the wake-up detector is configured to transmit a wake-up signal to said power management unit.

4. The NFC device of any preceding claim, wherein the wake-up detector is communicatively coupled to an external host processor, and wherein the wake-up detector is configured to transmit a wake-up signal to said host processor.

5. The NFC device of any preceding claim, wherein the wake-up detector is communicatively coupled to an external system power management unit, and wherein the wake-up detector is configured to transmit a wake-up signal to said system power management unit.

6. The NFC device of any preceding claim, said NFC device being by default in at least one of a power-off state, a deep-sleep state, a low-power state or a standby state.

7. The NFC device of any preceding claim, wherein waking up the processor comprises causing an NFC system state to change from standby to active by initiating a start-up sequence, wherein said start-up sequence is initiated in response to receiving, by the processor, a wake-up signal from the wake-up detector.

8. The NFC device of claim 3, wherein receiving, by the power management unit, the wake-up signal initiates a start-up sequence which causes an NFC system state to change from power-off to active.

9. The NFC device of any preceding claim, wherein the wake-up detector is implemented as a passive device, a semi-active device, or an active device.

10. A wearable device comprising the NFC device of any preceding claim.

11. A method of managing power in an NFC device, said NFC device comprising a processor and a wake-up detector that operate in different power domains, wherein the wake-up detector wakes up the processor in response to receiving power derived from an RF field.

12. The method of claim 11, wherein the wake-up detector is coupled to a signal line between a matching network and an input of a receiver of the NFC device, and wherein the wake-up detector receives the power derived from the RF field via said signal line.

13. The method of claim 11 or 12, wherein the wake-up detector is communicatively coupled to a power management unit of the NFC device, and wherein the wake-up detector transmits a wake-up signal to said power management unit.

14. The method of any one of claims 11 to 13, wherein the wake-up detector is communicatively coupled to an external host processor, and wherein the wake-up detector transmits a wake-up signal to said host processor.

15. The method of any one of claims 11 to 14, wherein the wake-up detector is communicatively coupled to an external system power management unit, and wherein the wake-up detector transmits a wake-up signal to said system power management unit.

## Amended claims

### Amended claims in accordance with Rule 137(2) EPC.

1. A near field communication, NFC, device (102) being an NFC controller, comprising a processor (104) and a wake-up detector (106), wherein the processor (104) and the wake-up detector (106) are configured to operate in different power domains (114, 116) in the sense that the processor and the wake-up detector are configured to be supplied by different power sources;
wherein the processor (104) is configured to be supplied by a power management unit (108) of the NFC device (102) and the wake-up detector (106) is configured to be supplied by a dedicated power management unit or the wake-up detector (106) is configured to generate its supply on demand by harvesting power from a signal to be detected;
wherein no voltage supply line is provided from the power management unit (108) of the NFC device (102) to the wake-up detector (106);
and wherein the wake-up detector (106) is configured to wake up the processor (104) in response to receiving power derived from a radio frequency, RF, field.

2. The NFC device (102) of claim 1, wherein the wake-up detector (106) is coupled to a signal line between a matching network (118) and an input of a receiver (110) of the NFC device (102), and wherein the wake-up detector (106) is configured to receive the power derived from the RF field via said signal line.

3. The NFC device (102) of claim 1 or 2, wherein the wake-up detector (106) is communicatively coupled to the power management unit (108) of the NFC device (102), and wherein the wake-up detector (106) is configured to transmit a wake-up signal to said power management unit (108).

4. The NFC device (102) of any preceding claim, wherein the wake-up detector (106) is communicatively coupled to an external host processor, and wherein the wake-up detector (106) is configured to transmit a wake-up signal to said host processor.

5. The NFC device (102) of any preceding claim, wherein the wake-up detector (106) is communicatively coupled to an external system power management unit, and wherein the wake-up detector (106) is configured to transmit a wake-up signal to said system power management unit.

6. The NFC device (102) of any preceding claim, said NFC device (102) being by default in at least one of a power-off state, a deep-sleep state, a low-power state or a standby state.

7. The NFC device (102) of any preceding claim, wherein waking up the processor (104) comprises causing an NFC system state to change from standby to active by initiating a start-up sequence, wherein said start-up sequence is initiated in response to receiving, by the processor (104), a wake-up signal from the wake-up detector (106).

8. The NFC device (102) of claim 3, wherein receiving, by the power management unit (108), the wake-up signal initiates a start-up sequence which causes an NFC system state to change from power-off to active.

9. The NFC device (102) of any preceding claim, wherein the wake-up detector (106) is implemented as a passive device, a semi-active device, or an active device.

10. A wearable device comprising the NFC device (102) of any preceding claim.

11. A method of managing power in an NFC device (102) being an NFC controller, said NFC device (102) comprising a processor (104) and a wake-up detector (106) that operate in different power domains (114, 116) in the sense that the processor (104) and the wake-up detector (106) are supplied by different power sources;
wherein the processor (104) is supplied by a power management unit (108) of the NFC device (102) and the wake-up detector (106) is supplied by a dedicated power management unit or the wake-up detector (106) generates its supply on demand by harvesting power from a signal to be detected;
wherein no voltage supply line is provided from the power management unit (108) of the NFC device (102) to the wake-up detector (106);
wherein the wake-up detector (106) wakes up the processor (104) in response to receiving power derived from an RF field.

12. The method of claim 11, wherein the wake-up detector (106) is coupled to a signal line between a matching network (118) and an input of a receiver (110) of the NFC device (102), and wherein the wake-up detector (106) receives the power derived from the RF field via said signal line.

13. The method of claim 11 or 12, wherein the wake-up detector (106) is communicatively coupled to the power management unit (108) of the NFC device (102), and wherein the wake-up detector (106) transmits a wake-up signal to said power management unit (108).

14. The method of any one of claims 11 to 13, wherein the wake-up detector (106) is communicatively coupled to an external host processor, and wherein the wake-up detector (106) transmits a wake-up signal to said host processor.

15. The method of any one of claims 11 to 14, wherein the wake-up detector is communicatively coupled to an external system power management unit, and wherein the wake-up detector (106) transmits a wake-up signal to said system power management unit.
